# EUROPÄISCHE PATENTSCHRIFT

(11) **EP 0 477 764 B1**
(45) Veröffentlichungstag und Bekanntmachung des Hinweises auf die Patenterteilung: **02.01.1997**
(21) Anmeldenummer: 91115889.7
(22) Anmeldetag: 19.09.1991
(51) Int. Cl.: C08F 279/02, C08F 279/04

(54) **Verfahren zur Herstellung von ABS-Formmassen**
Process for the preparation of ABS moldings
Procédé de préparation de masses à mouler d'ABS

(30) Priorität: 27.09.1990 DE 4030512
(43) Veröffentlichungstag der Anmeldung: 01.04.1992
(73) Patentinhaber: BASF Aktiengesellschaft, 67063 Ludwigshafen (DE)
(72) Erfinder: Baumgartner, Ehrenfried, Dr., W-6701 Roedersheim-Gronau (DE); Hofmann, Jürgen, W-6700 Ludwigshafen (DE); Jung, Rudolf H., Dr., W-6520 Worms 1 (DE); Moors, Rainer, Dr., W-6703 Limburgerhof (DE); Schaech, Hansjoerg, W-6700 Ludwigshafen (DE)

(56) Entgegenhaltungen:
- EP-A- 0 054 141
- FR-A- 2 304 645
- GB-A- 2 129 433

## Beschreibung

Die Erfindung betrifft ein Verfahren zur fortlaufenden (kontinuierlichen) Herstellung von schlagzähem Polystyrolacrylnitril (ABS) durch radikalisch ausgelöste Polymerisation eines Gemisches aus 60 bis 90 Gew.-% Styrol und 10 bis 40 Gew.-% mindestens eines weiteren ethylenisch ungesättigten Monomeren, wovon mindestens eines Acrylnitril ist, in Gegenwart von - bezogen auf die Summe der Monomeren - 10 bis 30 Gew.-% Polybutadien einer Lösungsviskosität von 25 bis 95 mPa·s, gemessen bei 25°C in 5-gew.-%iger Lösung in Styrol, und gegebenenfalls in einem Lösungsmittel in mindestens drei hintereinandergeschalteten, im wesentlichen rückvermischungsfrei betriebenen Turmreaktoren, die innenliegende, in mehreren horizontalen Ebenen parallel angeordnete Kühlrohre und einen zwischen die Kühlrohrebenen greifenden Rührer aufweisen, bei Reaktionstemperaturen von 50 bis 170°C.

Auf kontinuierliche Verfahren zur Herstellung von schlagzähem, ggf. acrylnitrilmodifiziertem Polystyrol beziehen sich beispielsweise die folgenden Druckschriften:

| | |
|---|---|
| (1) US-A-3 243 481 | (7) EP-A-54 141 |
| (2) US-A-4 252 911 | (8) JP-A-63 199 717 |
| (3) EP-A-103 657 | (9) JP-A-63 207 804 |
| (4) DE-A-3 339 531 | (10) JP-A-63 207 803 |
| (5) DE-A-2 448 596 | (11) JP-A-54 070 350. |
| (6) US-A-4 410 659 | |

Danach ist die kontinuierliche Herstellung von ABS-Polymerisaten, insbesondere in zwei oder mehr Reaktionszonen aus (1) und (2) bekannt. Sie wird im Temperaturbereich von 80 bis 180°C ausgeführt; in einer anschließenden sog. Entgasung (Entfernung des Lösungsmittels bzw. der Monomerreste) werden auch höhere Temperaturen angewendet.

Ein anderes Verfahren zur Herstellung von ABS-Polymerisaten ist die Emulsionspolymerisation; auf diese wird hier nicht näher eingegangen.

Die mechanischen Eigenschaften der in Masse oder Lösung polymerisierten und der in Emulsion hergestellten ABS-Formmassen gleichen sich weitgehend. Vorteile bei der Masse- oder Lösungspolymerisaten sind vor allem die niedrigeren Herstellkosten (u.a. höhere Kautschukeffektivität, kein Abwasser) und die hellere, weniger Pigmente zur Einfärbung verbrauchende Eigenfarbe der Produkte. Nachteilig ist aber im Vergleich zum Ergebnis der Emulsionspolymerisation ein geringerer Oberflächenglanz, weil das in Masse oder Lösung polymerisierte ABS verhältnismäßig große dispergierte Kautschukpartikel besitzt. Es hat daher eine Reihe von Versuchen gegeben, diesen Mangel durch entsprechende Verfahrensänderungen auszugleichen und ABS in Masse- oder Lösungspolymerisation so herzustellen, daß kleine Kautschukpartikel erhalten werden.

In (3) ist eine Formmasse aus einer Hartmatrix und einer Weichphase mit einem Kautschukpartikeldurchmesser von unter 1,5 µm beschrieben. Es sollen nur Kautschuke mit einer Lösungsviskosität (5 %ig in Styrol) von mindestens 120 cP für die beanspruchten Produkte in Frage kommen. ABS-Massen mit Kautschukpartikeln von 0,5 µm oder weniger, die für einen dem Emulsions-ABS ebenbürtigen Glanz notwendig sind, werden danach nicht erhalten.

Aus (4) läßt sich der Hinweis ermitteln, daß bei einem kontinuierlichen Verfahren zur Herstellung von Masse- oder Lösungs-ABS u.a. die Kautschukkonzentration unter 12 Gew.-% gehalten werden muß, um ein ABS mit kleinen Kautschukpartikeln zu erzeugen. Produkte mit einem Kautschukgehalt von unter 12 Gew.-% und einer maximalen Teichgröße von 0,5 µm haben aber eine für die Praxis ungenügende Kerbschlagzähigkeit.

Die im Recherchenbericht genannte GB-A-2 129 433 betrifft ein kinetisch von der Anmeldung völlig verschiedenes Verfahren, in dem in zwei hintereinandergeschalteten Reaktoren gearbeitet wird, die als Rührkessel, d.h. als im wesentlichen rückvermischte Reaktionsräume anzusehen sind.

In (5) ist eine Masse-Suspensionspolymerisation für ein ABS-Polymerisat zur Herstellung von Mischungen mit Polyestern beschrieben. Für den ABS-Bestandteil sollen Teilchengrößen von 500 bis 2000 nm erzielt werden. Durch Anwendung hoher Initiatorkonzentrationen (vgl. Beispiel 1), erhält man Kautschukpartikel mit einem Durchmesser von weniger als 1000 nm. Abgesehen davon, daß auch solche ABS-Produkte nicht mit den in Emulsion hergestellten Formmassen vergleichbar sind (diese haben z.B. Kautschukpartikeldurchmesser von unter 500 nm), läßt sich dieses Verfahren nicht mit einer kontinuierlichen Lösungspolymerisation anwenden, da die hohe Reaktionsgeschwindigkeit bei höherem Umsatz zu Störungen in den Reaktoren führt.

In (6) wird eine kontinuierliche Masse-Polymerisation in einem Extruder unter Einsatz großer Mengen Acrylnitril beschrieben, die ABS-Produkte mit einem Kautschukpartikeldurchmesser von 10 bis 500 nm liefert. Aufgrund des großen überschusses an Acrylnitril wird der Kautschuk quasi gefällt; die entstehenden Kautschukpartikel besitzen keine Hartmatrixeinschlüsse, was zu den schon erwähnten Nachteilen führt. Außerdem ist eine Polymerisation in einem Extruder eine für die Großtechnik extrem teure Technologie.

Der Einsatz von Kautschuk mit extrem niedriger Lösungsviskosität (8) in einer Lösungspolymerisation ergibt immerhin Kautschukpartikel mit einem maximalen Durchmesser von 750 nm. Der Oberflächenglanz eines solchermaßen erzeugten ABS kann aber nicht mit einem in Emulsionspolymerisation erzeugten ABS konkurrieren, dafür sind die Kautschukpartikel zu groß. Aufgrund des geringen Molekulargewichts des Kautschuks sind die erhaltenen Kautschukpartikel schlecht mit Hartmatrix gefüllt, was zu den bereits geschilderten Nachteilen führt.

Als Schlagzähmodifier für ABS wird in (7) ein "kautschukartiges Polymerisat" mit geringer Lösungsviksosität verwandt. In den Beispielen ist das "kautschukartige Polymerisat" als Styrol-Butadienblockcopolymerisat beschrieben. Es werden durchschnittlich Kautschukpartikelgrößen von 500 bis 600 nm erhalten.

In (9) bis (11) wird ebenfalls der Einsatz von Blockkautschuk zur Herstellung von ABS mit kleinen Kautschukpartikeln beschrieben. Von Nachteil ist aber der hohe Preis des Blockkautschuks, die den Kostenvorteil des Masse- oder Lösungspolymerisationsverfahren wieder zunichte machen.

Aufgabe war es daher, ein Verfahren zu finden, das unter Verwendung von Polybutadien auch in kontinuierlichem Masse- oder Lösungspolymerisationsverfahren zu einem hochglänzenden ABS mit kleinen Kautschukpartikeln, d.h. solchen mit einem Durchmesser von weniger als 500 nm führt.

Die Lösung der Aufgabe gelingt durch Aufteilung der Polymerisation in mehrere hintereinandergeschaltete, im wesentlichen rückvermischungsfrei arbeitende (d.h. als Rohrreaktoren ausgebildete) Reaktionszonen, in denen jeweils bestimmte, eng umschriebene Betriebsbedingungen herrschen.

Für das Verfahren kommen als Monomere Styrol und Acrylnitril im Verhältnis von 90/10 bis 60/40 in Frage. Äquivalente Monomere wie α-Methylstyrol, o-, m-, p-Methylstyrol, tert.-Butylstyrol bzw. Methacrylnitril können in bekannter Weise anstelle oder zusammen mit Styrol bzw. Acrylnitril verwendet werden.

Aus Gründen der Klarheit und Einfachheit wird im folgenden i. a. von Styrol, Acrylnitril und Polybutadien gesprochen, auch wenn deren Äquivalente gemeint sind; die Erfindung ist insoweit nicht beschränkt.

Als Kautschuk ist Polybutadien vom Medium- oder High-cis-Typ mit einem Molekulargewicht von 70 000 bis 350 000 (Gewichtsmittel) besonders geeignet. Grundsätzlich ist das Verfahren aber auch auf Blockkautschuke z.B. vom Styrol-Butadientyp anwendbar. Der Kautschuk wird in einer Menge von vorzugsweise 3 bis 30 Gew.-%, bezogen auf die Monomeren, eingesetzt.

Geeignete Radikalinitiatoren sind pfropfaktive Peroxide. Besonders bevorzugt sind Initiatoren, die tert.-Butyloxiradikale liefern. Von besonderer Bedeutung sind tert.-Butylperester mit einer Zerfallsrate von t_{1/2} bei 90°C ≤ 20 Minuten wie z.B. tert.-Butylperneodecanoat und/oder tert.-Butylperpivalat. Die genannten tert.-Butylperester werden den ersten beiden Reaktionstürmen jeweils separat zudosiert. Dabei können in den Türmen 1 oder 2 entweder gleiche Starter oder auch zwei unterschiedliche Starter verwandt werden. Die Initiatoren werden jeweils in Mengen von 0,01 bis 0,5 Gew.-%, bezogen auf Monomere, eingesetzt.

Als Kettenüberträger (Regler) kommen die üblicherweise verwendeten Mercaptane mit 4 bis 18 C-Atomen in Betracht. Es haben sich besonders das n-Butylmercaptan, das n-Octylmercaptan sowie das n- oder t.-Dodecylmercaptan bewährt. Die Menge an Mercaptan, falls angewendet, beträgt in der Regel 0,01 bis 0,3 Gew.-%, bezogen auf die Monomeren.

Falls die Polymerisation in Lösung durchgeführt wird, eignen sich Toluol, Xylol, Methylethylketon oder Tetrahydrofuran und insbesondere Ethylbenzol. Die Lösungsmittel werden in Mengen von bis zu 25 Gew.-%, bezogen auf Monomere angewendet.

Unmittelbarer Erfindungsgegenstand ist ein Verfahren der eingangs genannten Art zur Herstellung von schlagzähem Polystyrolacrylnitril, wobei erfindungsgemäß die Polymerisation ausgelöst wird durch t-Butylperester einer Halbwertszeit, gemessen bei 90°C, von 20 Minuten oder weniger, die dem ersten und zweiten Reaktor jeweils in einer Menge von 0.01 bis 0.5 Gew.-%, bezogen auf Monomere zugesetzt werden, wobei im ersten Reaktor das vcrhandene Polybutadien mit Styrol und Acrylnitril gepfropft und im zweiten Reaktor soweit polymerisiert wird, daß Phaseninversion eintritt, die Polymerisation bis zur Phaseninversion bei einer Temperatur von 90°C oder weniger vorgenommen wird, wobei der Polybutadiengehalt, bezogen auf das gesamte Reaktionsgemisch mindestens 10 Gew.-% beträgt und bis zur Phaseninversion höchstens 25 % des insgesamt benötigten Kettenüberträgers (Reglers) zugegeben wird, und wobei als Reaktionsraum, in dem die Phaseninversion stattfindet, die Verwendung eines Ringspaltreaktors ausgeschlossen ist.

Als Kautschuk ist Polybutadien z.B. vom medium- oder high-cis-Typ mit einem Molekulargewicht im Bereich von 70 000 bis 350 000 (Gewichtsmittel) besonders geeignet. Der Kautschuk wird in einer Menge von vorzugsweise 10 bis 30 Gew.-%, bezogen auf Monomere, eingesetzt.

Das erfindungsgemäße Verfahren wird in mindestens 3 Reaktionszonen d.h. getrennt betriebenen Reaktoren durchgeführt; bevorzugt wird eine Reaktorkaskade aus 4 Reaktionszonen. Als Reaktionszonen werden gerührte Polymerisationstürme mit innenliegenden Kühlrohren bevorzugt. Nach den Begriffsbestimmungen der Verfahrenstechnik entsprechen diese Reaktionszonen oder -türme jeweils einem Rohrreaktor; sie verhalten sich etwa so, daß eine i.w. rückvermischungsfreie Pfropfenströmung angenommen werden kann.

In der ersten Reaktionszone wird das Polybutadien mit Styrol und Acrylnitril gepfropft, d.h. es wird bis zum ca. 0,7 fachen der eingesetzten Polybutadienmenge polymerisiert (bei einer Lösungskonzentration von 10 % Polybutadien bezogen auf Monomere 7 % Polystyrolacrylnitril). In der ersten Reaktionszone wird die Polymerisation mit tert.-Butylperestern (t_{1/2} bei 90°C ≤ 20 Minuten) gestartet.

Im zweiten Polymerisationsturm erfolgt die Phaseninversion, d.h. es wird unter Rühren mindestens bis zum doppelten Feststoffgehalt der eingesetzten Polybutadienmenge polymerisiert, so daß der Abschluß der Phaseninversion gewährleistet ist. Die Polymerisation wird ebenfalls isotherm bei ≤ 90°C unter Einsatz von leicht zerfallenden tert.-Butylperestern als Starter (t_{1/2} bei 90°C ≤ 20 Minuten) durchgeführt. Es werden in der Zone der Phaseninversion maximal 25 Gew.-% der insgesamt zur Molekulargewichtseinstellung benötigten Reglermenge, z.B. Mercaptan, zugegeben. Die restliche Reglermenge kann in die nachfolgenden Reaktionstürme 3 und/oder 4 dosiert werden.

In den Polymerisationstürmen 3 und 4 erfolgt die thermische Polymerisation der Polystyrolacrylnitril-Matrix bis zu einem Feststoffgehalt von wenigstens 50 %, bevorzugt aber mindestens 65 Gew.-%. Nach dem viertem Polymerisationturm wird die Polymerschmelze entgast und nach dem Abkühlen als Strang granuliert.

Während der Polymerisation, insbesondere nach Herstellung der Lösung des Kautschuks oder vor der Verarbeitung der nach dem erfindungsgemäßen Verfahren erhaltenen schlagfesten Polymerisate können übliche Zusatzstoffe, wie innere Gleitmittel, Antioxidantien oder UV-Stabilisatoren, sowie Schmiermittel, Füllstoffe u. dgl. dem Reaktionsansatz in üblichen, dem Fachmann bekannten Mengen, zugesetzt werden.

Der Vorteil des erfindungsgemäßen Verfahrens besteht darin, daß ein hoher Pfropfgrad des Kautschuks und eine hohe Pfropfausbeute erzielt werden; ohne daß es zu Schwierigkeiten in der Wärmeabfuhr, zu Kesselanwachsungen oder zu vorzeitigen Vernetzungen kommt. Hierdurch gelingt es, kleine Kautschukpartikel (d.h. solche mit Durchmessern von unter 500 nm) und somit ABS herzustellen, das in geeigneten Formen hohen Oberflächenglanz entwickelt. Ein weiterer Vorteil besteht darin, daß sich gezielt mit ein und demselben Kautschuk je nach Reaktionsführung Produkte mit hoher Schlagzähigkeit oder mit guter Transluzenz herstellen lassen.

Die nach dem erfindungsgemäßen Verfahren erhaltenen Formmassen können in üblicher Weise thermoplastisch verarbeitet werden, also z.B. durch Extrudieren, Spritzgießen, Kalandrieren, Hohlkörperblasen, Pressen oder Sintern; bevorzugt werden durch Spritzgießen Formteile hergestellt.

Die in den nachstehenden Beispielen und Vergleichsversuchen verwendeten stofflichen Kennwerte wurden wie folgt bestimmt:
- Die Lösungsviskosität, LV, des Kautschuks wird in einer 5 gew.-%igen Lösung in Styrol bei 25°C gemessen.
- Die mittlere Teilchengröße wird durch Auswertung elektronenmikroskopischer Aufnahmen ermittelt.
- Die Kerbschlagzähigkeit wird an bei 230°C spritzgegossenen Formkörpern nach DIN 53 453 gemessen.
- Der Oberflächenglanz wurde mit einem Dr. Lange Labor-Reflektometer nach DIN 67 530 an den Seitenflächen von spritzgegossenen Testkästchen gemessen. Abweichend von DIN 67 530 wurde der Meßwinkel auf 55,8°C eingestellt. Die Testkästchen haben eine Länge von 11 cm, eine Breite von 4,3 cm und eine Höhe von 5 cm. Die Testkästchen wiegen ca. 26 - 27 g. Die Spritzgußbedingungen zur Herstellung der Testkästchen sind in den Beispielen jeweils angegeben.

Die angegebenen Mengen beziehen sich im allgemeinen auf das Gewicht.

### Beispiel 1 - 4

Eine geeignete Polymerisationsanlage besteht aus einem 250 l Kautschuklösebehälter, einem 250 l Vorratsbehälter sowie vier in Reihe geschalteten 30 l Turmreaktoren (l/d = 1100/220 mm) mit innenliegenden, in mehreren horizontalen Ebenen parallel angeordneten Kühlrohren und einem zwischen die Kühlrohrebenen greifenden Rührer sowie anschließender Entgasungs- und Granuliereinrichtung.

18 kg handelsüblicher Kautschuk (Buna HX 500 der Bayer AG mit einer Lösungsviskosität von 90 mPa·s als 5 %ige Lösung in Styrol bei 25°C) werden in 22,5 kg Ethylbenzol, 82,1 kg Styrol und 27,4 kg Acrylnitril unter Rühren innerhalb von 5 Stunden gelöst und die Lösung in den Vorratsbehälter gepumpt. Aus dem Vorratsbehälter wird die Polymerisationsanlage kontinuierlich mit Kautschuklösung versorgt. Es werden pro Stunde 20 l Kautschuklösung in die Polymerisationsanlage gefördert. In den ersten beiden Polymerisationstürmen wird die Polymerisation bei 80°C eingeleitet.

Hierzu werden fortlaufend in den ersten Turm 2,1 g/h tert.-Butylperpivalat gegeben und in den zweiten Turm 4,2 g/h. Im ersten Turm wird bis zu einem Feststoffgehalt von 18 Gew.-%, im zweiten Turm bis zu einem Feststoffgehalt von 28 Gew.-% polymerisiert. Die Rührergeschwindigkeit ist in beiden Polymerisationstürmen 150 Umdrehungen pro Minute. Auf diese Weise wird der Kautschuk im ersten Turm gepfropft, die Phaseninversion erfolgt im zweiten Polymerisationsturm. Die Prozeßführung in den ersten beiden Reaktionszonen ist entscheidend für die Ausbildung der Kautschukpartikelmorphologie in der PSAN-Matrix.

In den folgenden Reaktionszonen wird durch thermische Polymerisation die PSAN-Matrix ausgebildet. Hierzu wird im dritten Polymerisationsturm bei einer Temperatur von 130°C und einer Rührergeschwindigkeit von 50 Umdrehungen pro Minute ein Feststoffgehalt von 45 Gew.-% eingestellt. Im vierten Polymerisationsturm wird durch Polymerisation bei 146°C unter Rühren mit 10 Umdrehungen pro Minute ein Feststoffgehalt von 70 Gew.-% erhalten. Alle Polymerisationstürme werden jeweils vollständig gefüllt betrieben. Tert.-Dodecylmercaptan wird als Molekulargewichtsregler zusätzlich kontinuierlich in den zweiten und dritten Polymerisationsturm dosiert. Die Angaben der Tabelle 1 zeigen den Einflup der Reglerzugabe auf die Ausbildung kleiner Kautschukpartikel.

Nach dem Verlassen des vierten Polymerisationsturms wird die Polymerschmelze entgast und nach dem Abkühlen als Strang granuliert. Der Durchsatz betrug 14 kg/h, bezeichnet als Feststoff.

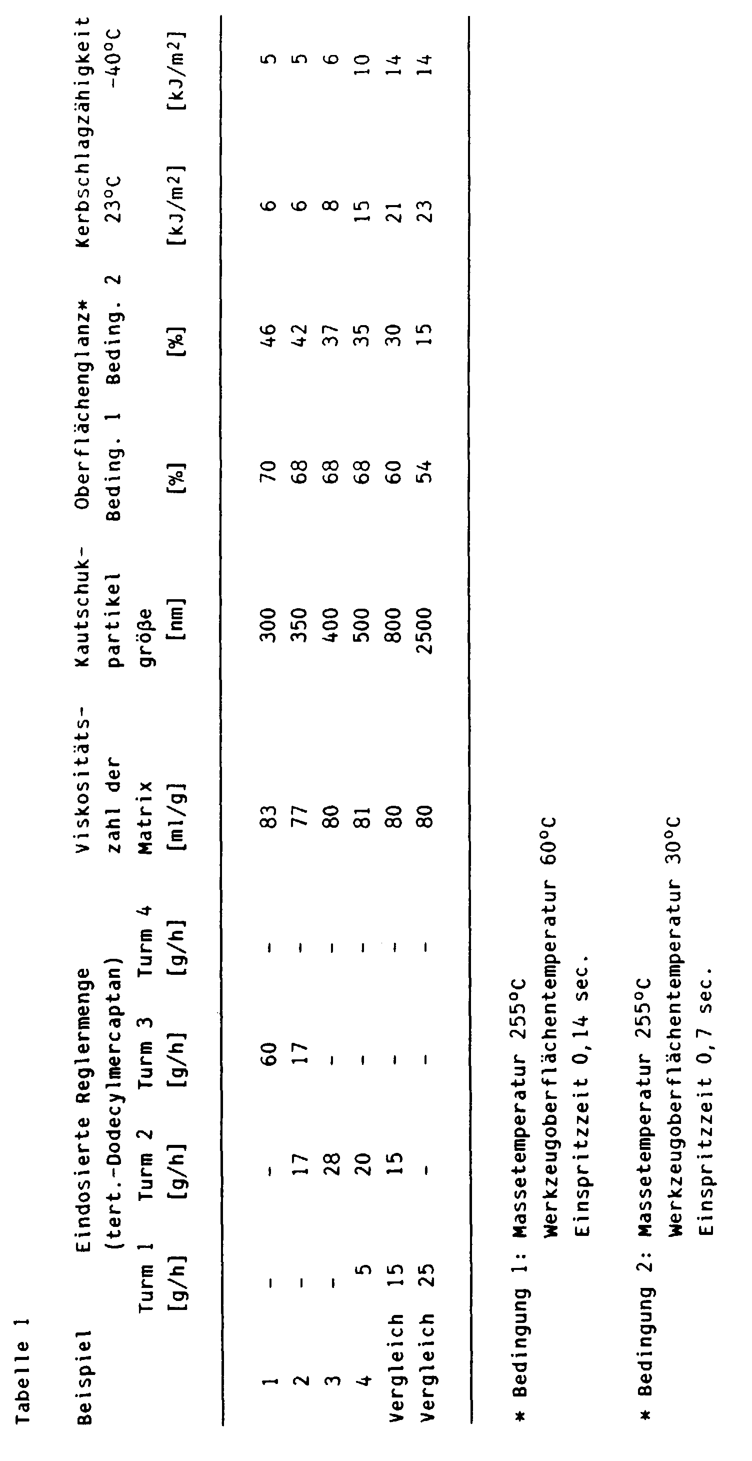

Die zum Vergleich hergestellten Formmassen genügen nicht mehr den Praxisanforderungen, die an den Oberflächenglanz von spritzgegossenen Fertigteilen gestellt werden.

Ein in Emulsionspolymerisation hergestelltes ABS mit vergleichbarem Kautschukgehalt von 17 % und einer Viskositätszahl der Hartmatrix von 80 ml/g hat unter der Bedingung 1 einen Oberflächenglanz von 68 %, unter der Bedingung 2 einen solchen von 47 %.

### Beispiele 5 - 8

Es wurde verfahren wie in den Beispielen 1 - 4 beschrieben. Es wurde jeweils mit tert.-Butylperpivalat als Starter und mit Reglerzugabe in den Turm 2 (s. Beispiel 3) polymerisiert. Die Feststoffgehalte in den Polymerisationstürmen wurden folgendermaßen eingestellt:
Turm 1 18 Gew.-% Feststoffgehalt
Turm 2 28 Gew.-% Feststoffgehalt
Turm 3 45 Gew.-% Feststoffgehalt
Turm 4 70 Gew.-% Feststoffgehalt

Es wurde jeweils soviel tert.-Dodecylmercaptan in den Turm 2 dosiert, daß die Viskositätszahl der Polystyrolacrylnitrilmatrix konstant bei ca. 80 ml/g blieb. Variiert wurde die Reaktionstemperatur in den Polymerisationstürmen 1 und 2.

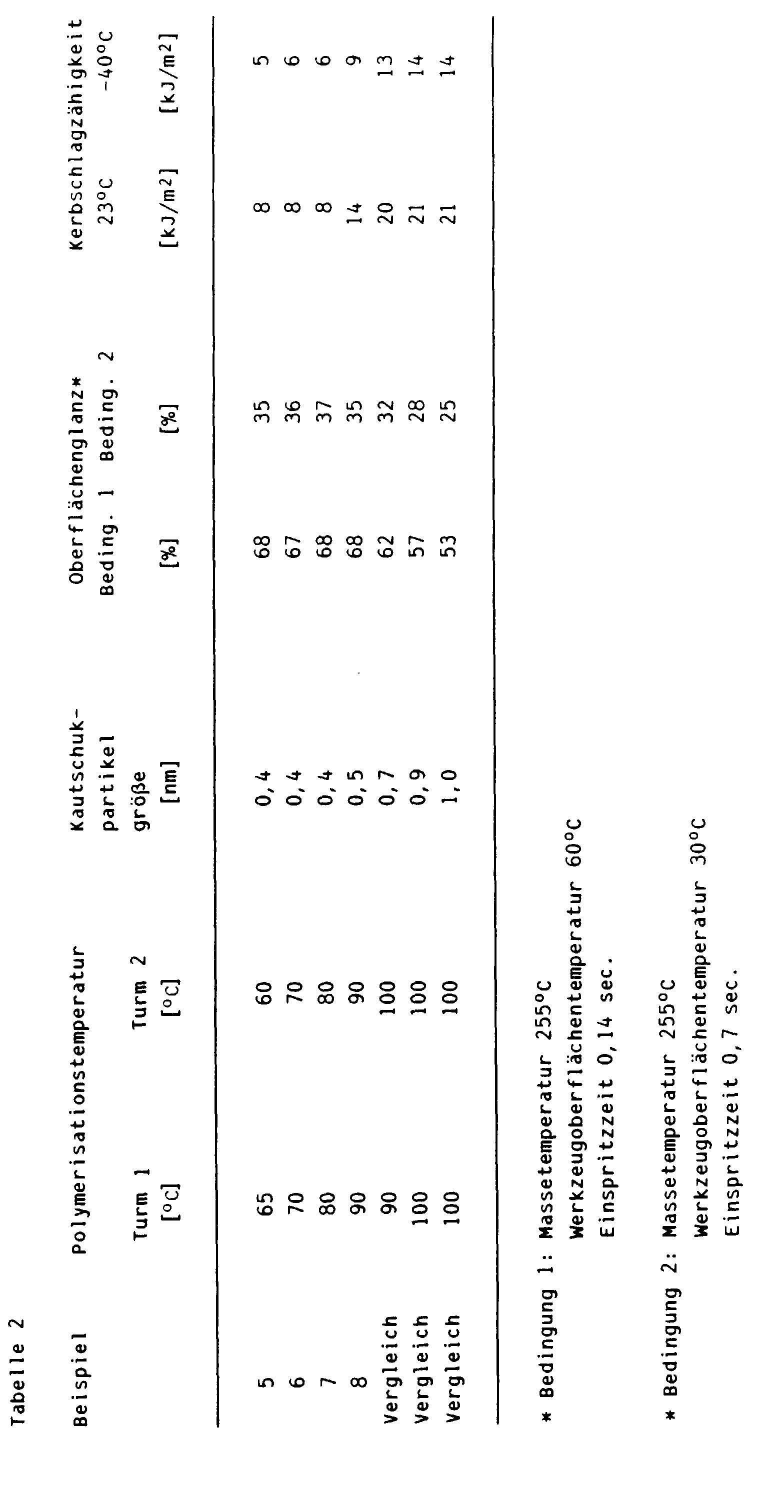

Die zum Vergleich hergestellten Formmassen genügen nicht mehr den Praxisanforderungen, die an den Oberflächenglanz von spritzgegossenen Fertigteilen gestellt werden.

### Beispiele 9 - 10

Es wurde wie im Beispiel 3 polymerisiert. Variiert wurde der zur Polymerisation benötigte Initiator.

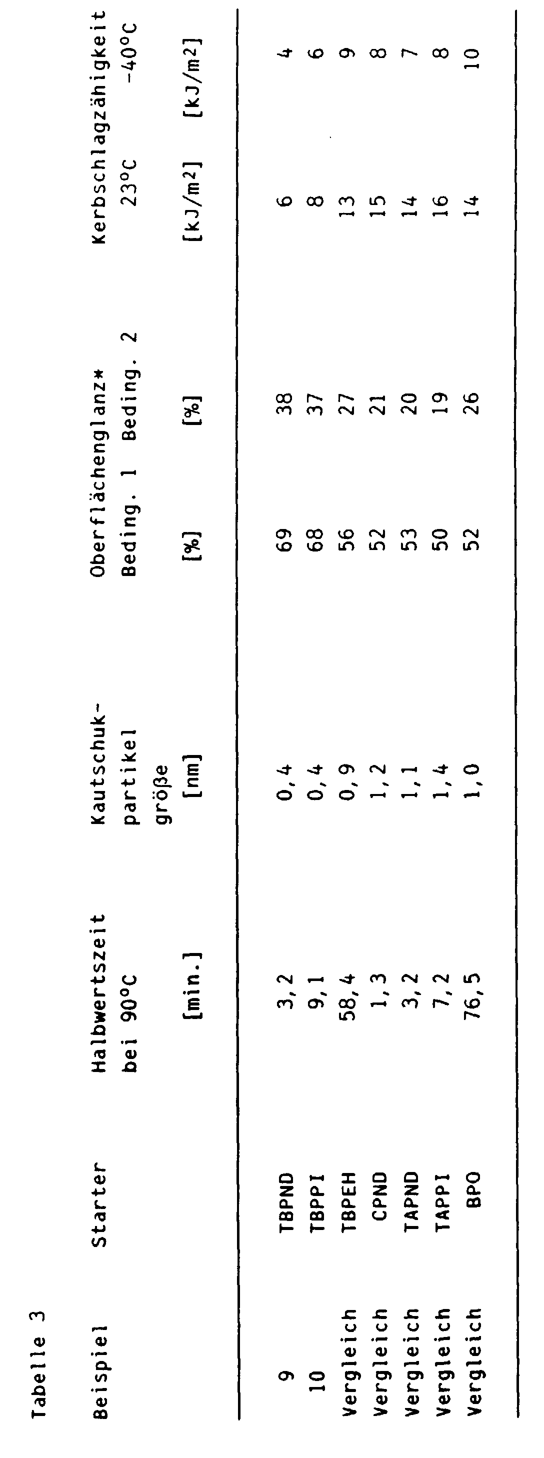

Die zum Vergleich hergestellten ABS-Formmassen genügen nicht mehr den Praxisanforderungen, die an den Oberflächenglanz von spritzgegossenen Fertigkeiten gestellt werden.

Die Abkürzungen für die verwendeten Starter bedeuten:
TBPND = tert.-Butylperneodecanoat
TBPPI = tert.-Butylperpivalat
TBPEH = tert.-Butylperethylhexanoat
CPND = α-Cumyl-perneodecanoat
TAPND = tert.-Amylperneodecanoat
TAPPI = tert.-Amylperpivalat
BPO = Di-Benzoylperoxid

### Beispiel 11

Es wurde wie in Beispiel 3 polymerisiert, anstelle von Buna HX 500 wurden die Polybutadien-Handelsprodukte Buna HX 529 C und Buna HX 565 eingesetzt. Es wurden ABS-Formmassen mit folgenden Eigenschaften erhalten.

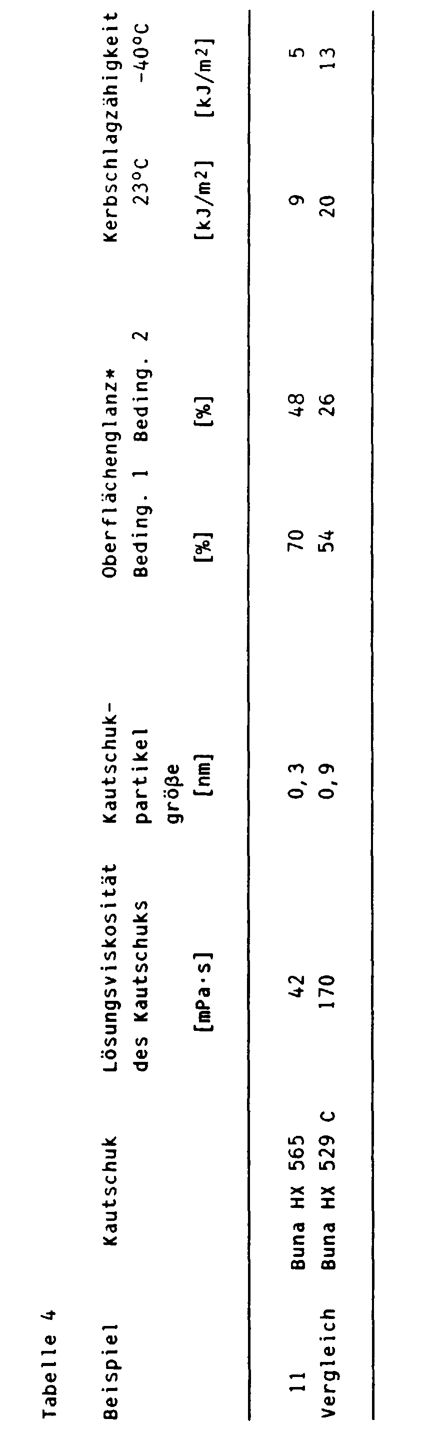

Die zum Vergleich hergestellte ABS-Formmasse genügt nicht den Praxisanforderungen, die an den Oberflächenglanz von spritzgegossenen Fertigteilen gestellt wird.

## Patentansprüche

1. Verfahren zur fortlaufenden (kontinuierlichen) Herstellung von schlagzähem Polystyrolacrylnitril (ABS) durch radikalisch ausgelöste Polymerisation eines Gemisches aus 60 bis 90 Gew.-% Styrol und 10 bis 40 Gew.-% mindestens eines weiteren ethylenisch ungesättigten Monomeren, wovon mindestens eines Acrylnitril ist, in Gegenwart von - bezogen auf die Summe der Monomeren - 10 bis 30 Gew.-% Polybutadien einer Lösungsviskosität, gemessen bei 25°C in 5-gew.-%iger Lösung in Styrol, von 25 bis 95 mPa·s und gegebenenfalls in einem Lösungsmittel in mindestens drei hintereinandergeschalteten, im wesentlichen rückvermischungsfrei betriebenen Turmreaktoren, die innenliegende, in mehreren horizontalen Ebenen parallel angeordnete Kühlrohre und einen zwischen die Kühlrohrebenen greifenden Rührer aufweisen, bei Reaktionstemperaturen von 50 bis 170°C, dadurch gekennzeichnet, daß die Polymerisation ausgelöst wird durch t-Butylperester einer Halbwertszeit, gemessen bei 90°C, von 20 Minuten oder weniger, die dem ersten und zweiten Reaktor jeweils in einer Menge von 0.01 bis 0.5 Gew.-%, bezogen auf Monomere zugesetzt werden, wobei im ersten Reaktor das vorhandene Polybutadien mit Styrol und Acrylnitril gepfropft und im zweiten Reaktor soweit polymerisiert wird, daß Phaseninversion eintritt, die Polymerisation bis zur Phaseninversion bei einer Temperatur von 90°C oder weniger vorgenommen wird, wobei der Polybutadiengehalt, bezogen auf das gesamte Reaktionsgemisch mindestens 10 Gew.-% beträgt und bis zur Phaseninversion höchstens 25 % des insgesamt benötigten Kettenüberträgers (Reglers) zugegeben wird, und wobei als Reaktionsraum, in dem die Phaseninversion stattfindet, die Verwendung eines Ringspaltreaktors ausgeschlossen ist.

2. Verfahren nach Anspruch 1, dadurch gekennzeichnet, daß tert.-Butylperneodecanoat und/oder tert.-Butylperpivalat als Starter verwendet werden.

## Claims

1. A process for the continuous preparation of high-impact polystyrene-acrylonitrile (ABS) by free radical-initiated polymerization of a mixture of from 60 to 90 % by weight of styrene and from 10 to 40 % by weight of at least one further ethylenically unsaturated monomer, at least one of which is acrylonitrile, in the presence of from 10 to 30 % by weight, based on the sum of the monomers, of polybutadiene having a solution viscosity, measured at 25°C in a 5 % strength by weight solution in styrene, of from 25 to 95 mPa.s and in the presence or absence of a solvent, in at least three consecutive tower reactors operated essentially without back-mixing and having internal cooling tubes arranged in parallel in a plurality of horizontal planes and a stirrer which reaches between the cooling tube planes, at a reaction temperature of from 50 to 170°C, which comprises initiating the polymerization by means of t-butyl peresters having a half life period, measured at 90°C, of 20 minutes or less which are added to each of the first and second reactors in an amount of from 0.01 to 0.5 % by weight, based on the monomers, the polybutadiene present being grafted in the first reactor with styrene and acrylonitrile and being polymerized in the second reactor to such an extent that phase inversion takes place, the polymerization as far as phase inversion being carried out at a temperature of 90°C or below, where the polybutadiene content, based on the total reaction mixture, is at least 10 % by weight, and at most 25 % of the total amount of chain-transfer agent (regulator) required is added by the time of phase inversion, and where the reaction space in which the phase inversion takes place is not an annular gap reactor.

2. A process as claimed in claim 1, wherein the initiator used is tert-butyl perneodecanoate and/or tert-butyl perpivalate.

## Revendications

1. Procédé de préparation ininterrompue (continue) de polystyrène-acrylonitrile (ABS) résistant aux chocs par polymérisation initiée par voie radicalaire d'un mélange de 60 à 90 % en poids de styrène et de 10 à 40 % en poids d'au moins un monomère éthyléniquement insaturé supplémentaire, dont au moins un est de l'acrylonitrile, en présence de - par rapport à la somme des monomères - 10 à 30 % en poids de polybutadiène d'une viscosité en solution de 25 à 95 mPa.s, mesurée à 25 °C en solution à 5 % en poids dans le styrène, et le cas échéant dans un solvant dans au moins trois réacteurs en tour connectés en série et opérés de manière essentiellement sans rétromélange, qui présentent des conduites de refroidissement internes, disposées parallèlement en plusieurs plans horizontaux et qui présentent un agitateur passant entre les plans de conduites de refroidissement, à des températures de réaction de 50 à 170 °C, caractérisé en ce que la polymérisation est déclenchée par des peresters de t-butyle d'une demi-vie, mesurée à 90 °C, de 20 minutes ou moins, qui sont ajoutés au premier et au deuxième réacteur respectivement en une quantité de 0,01 à 0,5 % en poids, par rapport aux monomères, au cours duquel on greffe dans le premier réacteur le polybutadiène présent avec du styrène et de l'acrylonitrile et on le polymérise dans le deuxième réacteur jusqu'à ce que l'inversion de phase se produise, la polymérisation est effectuée à une température de 90 °C ou moins jusqu'à l'inversion de phase, la teneur en polybutadiène, par rapport au mélange réactionnel total s'élevant à au moins 10 % en poids et en ajoutant, jusqu'à l'inversion de phase, au maximum 25 % de l'agent de transfert de chaîne (régulateur) total nécessaire, et au cours duquel l'utilisation d'un réacteur à passage annulaire à titre de chambre réactionnelle dans laquelle se produit l'inversion de phase est exclue.

2. Procédé selon la revendication 1, caractérisé en ce qu'on utilise le pernéodécanoate de tert.-butyle et/ou le perpivalate de tert.-butyle à titre d'initiateur.
